# EUROPÄISCHE PATENTSCHRIFT

(11) **EP 0 842 321 B1**
(45) Veröffentlichungstag und Bekanntmachung des Hinweises auf die Patenterteilung: **25.04.2001**
(21) Anmeldenummer: 96926400.1
(22) Anmeldetag: 30.07.1996
(51) Int. Cl.: D21C 9/10, D21C 9/16, C01B 15/037

(54) **VERFAHREN ZUR STABILISIERUNG VON ALKALISCHEN PEROXIDENTHALTENDEN BLEICHFLOTTEN FÜR DIE BLEICHE VON ZELLSTOFFEN UND ANDEREN FASERSTOFFEN**
METHOD OF STABILIZING PEROXIDE-CONTAINING ALKALINE BLEACH LIQUORS FOR BLEACHING CELLULOSE AND OTHER FIBROUS MATERIALS
PROCEDE DE STABILISATION DE BAINS DE BLANCHIMENT ALCALINS CONTENANT DES PEROXYDES POUR LE BLANCHIMENT DE PATES DE CELLULOSE ET D'AUTRES SUBSTANCES FIBREUSES

(30) Priorität: 04.08.1995 DE 19528843
(43) Veröffentlichungstag der Anmeldung: 20.05.1998
(73) Patentinhaber: CHT R. BEITLICH GmbH, 72072 Tübingen (DE)
(72) Erfinder: JASCHINSKI, Thomas, D-20146 Hamburg (DE); BACHUS, Herbert, D-72379 Hechingen (DE); KORDSACHIA, Othar, D-22113 Oststeinbek (DE); ODERMATT, Jürgen, D-21465 Reinbek (DE); PATT, Rudolf, D-21465 Reinbek (DE)
(74) Vertreter: Mammel, Ulrike, Dr. Dipl.-Chem.
(86) Internationale Anmeldenummer: EP9603343
(87) Internationale Veröffentlichungsnummer: WO9706303

(56) Entgegenhaltungen:
- EP-A- 0 141 355
- WO-A-95/12029
- FR-A- 2 601 025
- GB-A- 2 206 903
- PATENT ABSTRACTS OF JAPAN vol. 012, no. 050 (C-476), 16.Februar 1988 & JP 62 197304 A (NIPPON PEROXIDE CO LTD), 1.September 1987,

## Beschreibung

Gegenstand der Erfindung ist ein Verfahren zur Stabilisierung von wäßrigen alkalischen Bleichlösungen, die unter Sauerstoffdruck durchgeführt und in denen in situ Peroxoverbindungen gebildet werden, und/oder alkalische Bleichverfahren, wobei der wäßrigen Faserstoffsuspension neben Sauerstoff, Wasserstoffperoxid und/oder peroxidabspaltende Verbindungen zugesetzt werden sowie alkalische Peroxidbleichverfahren, die drucklos, bzw. nur bei hydrostatischem Druck durchgeführt werden.

Verfahren zur Stabilisierung von alkalischen Bleilösungen gemäß dem Oberbegriff des Anspruchs 1, wobei als Stabilisator eine Kombination aus einem Komplexbildnertyp 1 zusammen mit einem Komplexbildnertyp 2 verwendet wird, sind aus den Druckschriften GB-A-2 206 903, FR-A-2 601 025, WO-A-95/12029 und EP-A-0 141 355 bekannt.
Der zunehmende Trend, sämtliche bei der Papierproduktion eingesetzten Faserrohstoffe wie Zellstoffe sowie Holzstoffe und Altpapier aber auch Chemiezellstoffe vollständig chlorfrei mit Sauerstoff und sauerstoffhaltigen Chemikalien wie Wasserstoffperoxid und Ozon zu bleichen, macht verstärkte Anstrengungen notwendig, die gegenüber Chlor und chlorhaltigen Chemikalien geringere Selektivität der oben genannten sauerstoffhaltigen Bleichmittel zu verbessern. Im alkalischen Medium wirken vor allem die in den cellulosischen Faserstoffen in geringen Konzentrationen enthaltenen Übergangsmetalle wie Mangan, Cobalt, Eisen und Kupfer u.a. katalytisch auf die in der Sauerstoffbleiche in situ gebildeten Peroxoverbindungen oder auf das in Peroxid- oder Sauerstoff-Peroxid-Bleichstufen eingesetzte Wasserstoffperoxid. Die homolytische Zersetzung der Peroxide führt, neben ganz erheblichen Peroxidverlusten, zur Bildung von Radikalen, die wegen ihrer geringen Selektivität neben dem Lignin auch mit der Cellulose reagieren, was zur Spaltung der Kohlehydratketten führt. Dies drückt sich bei Zellstoffen in einer meßbaren geringeren Viskosität der gebleichten Zellstoffe aus und setzt die Festigkeiten erheblich herab. Möglichkeiten zur Minimierung dieser Radikalkettenreaktion bestehen darin, die Schwermetallionen durch den Zusatz von geeigneten Sequestriermitteln durch Komplexbildung zu deaktivieren.

Schwermetalle sind in allen zur Papierherstellung verwendeten Faserstoffen in unterschiedlicher Menge und Zusammensetzung vorhanden. Sie gelangen aus dem Boden zusammen mit den Nährstoffen der Pflanze in das Holz. Weitere Quellen des Metalleintrags in den Prozeß sind die bei der Gewinnung der Faser aus dem Holz verwendeten Prozeßchemikalien, das Prozeßwasser selbst, aber auch mechanischer Abrieb und die Korrosion von Anlagenteilen. Bei Altpapierfasern können die Quellen noch vielfältiger sein, wie z.B. Zuschlagstoffe, Additive der Papierherstellung und Druckfarben. Die Schwermetallbelastung kann aber auch vom Schmutzeintrag in den Recyclingkreislauf zusammen mit dem Altpapier herrühren.

Mehrere Stabilisatoren wurden bislang vorgeschlagen, um die Bleichwirkung von Wasserstoffperoxid und der peroxidabspaltenden Verbindungen zu erhöhen. Dabei wird am häufigsten Natriumsilikat alkalischen Bleichlösungen zugesetzt. So wird Natriumsilikat z.B. standardmäßig bei der Peroxidbleiche von Holzschliffen eingesetzt. Auch ist es heute Stand der Technik, daß vor allem bei der Hochkonsistenz-Peroxidbleiche von Zellstoff bei einem Faserstoffgehalt im Bereich von 20-40% die zur Erzielung der nötigen Weiße notwendige Peroxidstabilisierung der alkalischen Bleichsuspension durch den Zusatz von Wasserglas erreicht wird. Natriumsilikat ist zwar ein hochwirksamer Stabilisator für Wasserstoffperoxid, der Einsatz von Wasserglas steht jedoch wegen des damit verbundenen 'scaling'-Problems der Zielsetzung entgegen, die Wasserkreisläufe zu schließen. Werden natriumsilikathaltige Ablaugen eingedampft und verbrannt, so führt dies in den Eindampfanlagen und Ablaugenverbrennungskesseln zu Ausfällungen. Aus diesem Grund kann Natriumsilikat in Zellstoffabriken mit geschlossenem Wasserkreislauf nicht als Stabilisator eingesetzt werden. Allgemein bekannt ist zudem, daß durch mit Wasserglas gebleichte Faserstoffe verfahrenstechnische Probleme bei der Papierproduktion auf Papiermaschinen und in anderen Anlagenteilen verursacht werden. Hinzu kommt, daß die gebleichten Fasermaterialien eine rauhe Griffigkeit bekommen, was sich insbesondere beim Einsatz des Zellstoffs zur Produktion von Tissue-Papieren als störend erweist.

Neben der Stabilisierung der Bleichflotten mit Natriumsilikat werden auch organische Peroxidstabilisatoren wie die Salze oder freie Säuren von Polyaminocarboxylaten als Stabilisatoren für peroxidhaltige Bleichlösungen eingesetzt. Nachteilig ist, daß Aminopolycarboxylate allein nicht besonders oxidationsstabil sind und die Effekte sich abschwächen, wenn die Bleichstufe, insbesondere die Bleiche mit Peroxid im Temperaturbereich von 90-130°C durchgeführt wird, was dem aktuellen Trend in der TCF-Bleiche entspricht. Generell ist es von ökologischem Vorteil, den Einsatz von Aminocarboxylaten zu reduzieren oder gar auf diese Substanzklasse zu verzichten, wie nachfolgend noch ausgeführt werden wird.

Eine weitere Möglichkeit zur Verbesserung der Bleichwirkung der sauerstoffhaltigen Bleichmittel besteht darin, die Schwermetalle durch eine geeignete Behandlung vor der Bleiche aus dem Faserstoff zu entfernen. Dabei können zur Entfernung der Schwermetalle zwei Wege beschritten werden, eine sogenannte saure Wäsche (A) oder die Komplexierung von Schwermetallen durch eine Komplexbildnerbehandlung in einer sogenannten Q-Stufe und die Entfernung aus dem Zellstoff durch eine nachfolgende Wäsche, siehe WO-A-93/14262. In einer sauren Wäsche wird zur pH-Wert-Absenkung üblicherweise Schwefelsäure eingesetzt und der Faserstoff in einem pH-Bereich von 4-2 sauer entmineralisiert. Unter diesen Bedingungen ist es möglich, den Mangangehalt im Faserstoff wirksam zu reduzieren. Der Gehalt an Eisenionen läßt sich jedoch nur relativ geringfügig vermindern, da Eisen auch unter sauren Bedingungen an der Faser gebunden bleibt, Bryant und Edwards, Tappi Journal 77 (2) (1994) 137-148. Nachteilig ist weiterhin, daß bei der beschriebenen sauren Entmineralisierung die zur Stabilisierung der Peroxidbleichflotte wichtigen Erdalkalimetalle wie Calcium und Magnesium mit entfernt werden.

Die Entfernung von Schwermetallionen aus dem Faserstoff unter Verwendung von Komplexbildnern wie Aminopolycarbonsäuren bietet dagegen die Möglichkeit, die Erdalkalimetalle weitgehend im Zellstoff zu belassen. Anwendungen zur Reduzierung des Gehalts an Übergangsmetallen aus lignocellulosischem Fasermaterial sind in der EP-A-0 554 965 beschrieben.

Organische Komplexbildner wie die verwendeten Aminopolycarbonsäuren bilden zwar mit Schwermetallen in stöchiometrischen Verhältnissen sehr stabile wasserlösliche Komplexe, dies ist jedoch unter ökologischen Aspekten als Nachteil anzusehen. Aminopolycarbonsäuren wie EDTA und DTPA u.a. bzw. deren Natriumsalze sind biologisch nicht abbaubar und besitzen ein hohes Remobilisierungsvermögen für toxische Schwermetalle, Schöberl und Huber, Tenside Surfactants Detergents 25 2 (1988) 105-106.

Obwohl die Funktionsweise der in der Bleichflotte anwesenden Magnesiumionen oder der zugesetzten wasserlöslichen Magnesiumsalze wie z.B. Magnesiumsulfat nicht in allen Einzelheiten geklärt ist, ist es allgemein üblich, Magnesium als anorganischen Stabilisator sowohl in Sauerstoff- als auch in Peroxid-Bleichstufen einzusetzen. Da Magnesiumsulfat die katalytische Wirkung insbesondere von Eisenionen sehr wirksam inhibiert, ist postuliert worden, daß Magnesium über Sauerstoff- oder Hydroxylbrücken Eisenionen anlagert, Abbot und Brown, Can. J. Chem. 68 (1990) 1537-1543. Auch die Bildung von Komplexen zwischen Magnesiumionen und sekundären Hydroxylgruppen der Glucoseeinheiten, wodurch die an die C-Atome gebundenen Wasserstoffatome vor dem Angriff durch Hydroxylradikale geschützt sind, sind als Modellvorstellung entwickelt worden, Backman und Gellerstedt, 7th ISWPC, Proc. Bejing (1993) 223-229. Mit Magnesiumionen lassen sich die Abbaureaktionen in der Sauerstoff- und/oder Peroxidbleiche zwar minimieren, jedoch nicht ausschließen. Hinzu kommt, daß Mg²⁺-lonen bei einem molaren Verhältnis Fe/Mg > 0,3 keine inhibierende Wirkung mehr zeigen, Gilbert et al., Tappi Journal 56 (6) (1973) 95-99. Zudem kann Magnesiumsulfat bei der Bleiche von mit Natrium als Base hergestellten Zellstoffen nur in geringen Mengen toleriert werden, da eine Mischung von Natrium- und Magnesiumverbindungen in der Chemikalienrückgewinnung zu Problemen führen kann.

Neben dem Problem, daß der Magnesiumgehalt im Faserstoff durch die saure Wäsche erheblich reduziert wird, ist weder die in einer separaten Stufe durchgeführte saure Wäsche (A) noch die Vorbehandlung mit Komplexbildnern in einer Q-Stufe geeignet, Übergangsmetalle vollständig aus dem Zellstoff zu entfernen. Dies gilt - wie erwähnt - insbesondere für Eisenionen.

Alkalische Bleichflotten können schon durch den alleinigen Zusatz von Gluconsäure stabilisiert werden (Gilbert et al., Tappi Journal 56 (6) (1973) 95-99). Nachteilig hieran ist jedoch, daß der "Effekt einer Gluconsäure ohne weiteren Zusatz anderer Komplexbildner nur ein kleiner Bruchteil der erfindungsgemäßen Zusammensetzungen beträgt, siehe Tabelle 4."
Anwendungen, bei denen ein organischer Peroxidstabilisator Bleichflotten direkt zugesetzt wird, sind bei der Bleiche von Textilien bekannt. Peroxide können durch den Zusatz von Phosphonsäuren als Ersatz für Wasserglas stabilisiert werden, siehe z.B. DE-B 2 211 578. Daneben werden auch Kombinationen von organischen Peroxidstabilisatoren eingesetzt.

Aus der DE-B 2 211 578 ist ein Verfahren zum Bleichen von textilen Cellulosefasern wie Baumwolle, Leinen, Nessel und Jute mit Wasserstoffperoxid oder Wasserstoffperoxidabspaltenden Verbindungen bekannt, bei welchem als Stabilisatoren Amino-niederalkylen-polyhydroxyverbindungen und/oder Hydroxy-niederalkanphosphonate zusammen mit aliphatischen Hydroxy- oder Polyhydroxyverbindungen mit 2 bis 6 Kohlenstoffatomen wie z.B. Gluconsäure oder Zitronensäure eingesetzt werden.

Während Baumwolle und andere textile Fasern nur in geringen Mengen Lignin enthalten und der Bleichprozeß vornehmlich als Reinigungsschritt zu verstehen ist, gleicht der Bleichprozeß bei Faserstoffen, die in einem chemischen oder mechanischen Aufschlußprozeß aus Holz gewonnen werden, in den ersten Prozeßstufen einem weitergeführten Aufschluß zur Delignifizierung bzw. Faserstoffgewinnung. Wesentliche Funktion in der Bleiche von Zellstoffen ist die fortgeführte Ligninentfernung, die erforderlich ist, um den angestrebten Weißgrad zu erreichen. Da bei textilen Faserstoffen wie z.B. Baumwolle die morphologische Struktur der Cellulose schon offen liegt, beschränkt sich die Bleichbehandlung auf die Entfernung von Fetten, Wachsen sowie Schmutzstoffen und der Oxidation von farbgebenden Verbindungen.

Neben dem Rohstoffaspekt unterscheiden sich auch die Bleichverfahren grundlegend, da bei Zellstoffen, Holzstoffen und Altpapier die Einzelfasern in wäßriger
Suspension z.B. in Bleichtürmen gebleicht werden.

Aus der Patentschrift DE 35 31 563 C2 ist ferner bekannt, daß bei der Peroxidbleiche von Holzstoffen wie Thermo-Refiner-Holzstoff, Chemo-Thermo-Refiner-Holzstoff (TMP, CTMP) und Holzschliff in Gegenwart von Amidoimidomethansulfinsäure (FAS) eine Komplexbildner-Kombination von Phosphaten und Polyhydroxycarbonsäuren und Phosphonsäuren die Effektivität des Bleichmittels erhöht.

Aus der GB-A-2 206 903 ist darüber hinaus bekannt, zur Stabilisierung Phosphonat und Aminopolycarbonsäuren gemeinsam zu verwenden.

Aufgabe der Erfindung ist es, ein neues, wirksames und umweltfreundliches Verfahren zur Stabilisierung von alkalischem Bleichlösungen, die Sauerstoff, Wasserstoffperoxid und/oder peroxidabspaltende Verbindungen enthalten, für die Bleiche von wäßrigen Faserstoffsuspensionen zur Papierherstellung oder zur Weiterverarbeitung in der chemischen Industrie genutzter Faserstoffe bereitzustellen und die Stabilisierung mit einer vereinfachten Kombination von Komplexbildnem zu erzielen.

Die Aufgabe wird durch die im Hauptanspruch enthaltenen Merkmale gelöst.

Es wird dabei durch synergistische Mischungen von Komplexbildnern als Peroxidstabilisatoren der Behandlungseffekt für Faserstoffsuspensionen erheblich gesteigert.

Durch die Stablisisierung wird bei gleichzeitiger Steigerung des Weißgrades ein erheblicher Minderverbrauch an Wasserstoffperoxid erreicht, was einen Kostenvorteil darstellt. Dies bedeutet, daß mit dem erfindungsgemäßen Verfahren eine Erhöhung der Bleicheffizienz und sogar eine Verbesserung der Zellstoffeigenschaften erzielt wird. Die Substitution einer separaten Komplexbildnerstufe im Bleichprozeß durch den direkten Zusatz des Stabilisators stellt eine wesentliche Verfahrensvereinfachung dar, die zusätzlich zur Bleichmitteleinsparung zu einer noch erheblicheren Kostenreduzierung beiträgt.

Sogar Nadelholzkraftzellstoffe, die gemeinhin als schwer bleichbar gelten, lassen sich durch die Zugabe der Komplexbildner-Kombination in den peroxidenthaltenden oder -bildenden Bleichbehandlungen auf hohe Weißgrade bleichen, ohne daß zusätzlich Ozon eingesetzt werden muß.

Durch die Temperaturstabilität der erfindungsgemäßen Abmischungen, auch unter den Bleichbedingungen mit Wasserstoffperoxid, ist eine vergleichsweise geringe Einsatzkonzentration möglich. Die Hauptkomponenten der Formulierungen, die Polyhydroxycarbonsäuren, sind biologisch leicht abbaubar, Phosphonate als Nebenbestandteil oder Polyhydroxyacrylsäuren werden durch Adsorption an Klärschlamm oder Sediment eliminiert und bei Phosphonaten ist unter umweltrelevanten Bedingungen ein rascher photolytischer und spontaner hydrolytischer Abbau bekannt. Im Gegensatz zu Komplexbildnern auf Aminopolycarbonsäurebasis besitzen sämtliche Abmischungskomponenten kein signifikantes Remobilisierungsvermögen für toxische Schwermetalle, Gledhill und Feijtel, The Handbook of Environmental Chemistry, Vol 3 Part F, 264 ff (1992). Selbst wenn Aminopolycarbonsäuren Bestandteil einer Ausführungsform dieser Anmeldung darstellen, ergibt dies eine Reduktion dieses Komplexbildner-Types, da die Komponente Polyhydroxicarbonsäure ökologisch unbedenklich ist.

Die gemäß der Erfindung stabilisierten Lösungen von Peroxidverbindungen können zu sehr unterschiedlichen Zwecken verwendet werden. Als besonders vorteilhaft hat sich der Einsatz der Komplexbildnerkombination bei folgenden Anwendungen gezeigt: Peroxidbleichstufen, die einer Ozonbehandlung des Zellstoffs folgen (Beispiel A und Beispiele B1-B3) sowie Peroxidbleichstufen im Mittelkonsistenzbereich ohne vorherige Ozonbehandlung (Beispiel C). Daneben können aber auch gleichermaßen Hochkonsistenz (HC)-Peroxidbleichstufen stabilisiert werden (Beispiel D). In peroxidverstärkten Sauerstoffstufen ist die Komplexbildner-Kombination ebenfalls anwendbar (Beispiel E).

Das erfindungsgemäße Verfahren ist zur Stabilisierung jedweder peroxidhaltigen Lösung anwendbar, die zum Bleichen verwendet wird. Vorzugsweise werden bei der Bleiche der genannten Faserstoffe wäßrige alkalische Peroxidbleichlaugen eingesetzt. Die Peroxidverbindung ist vorzugsweise Wasserstoffperoxid oder Natriumperoxid. Als für das Verfahren geeignete Basen werden vorzugsweise Natriumhydroxid, Kaliumhydroxid oder Magnesiumoxid verwendet. Die Verwendung von Magnesiumoxid als Base ist heute vor allem bei der Sauerstoff-Peroxidbleiche von nach dem sauren Magnesiumbisulfitverfahren aufgeschlossenen Zellstoffen üblich.

Die bei der Bleiche eingesetzten Mengen Alkali liegen im Bereich zwischen 2-50 kg/t bezogen auf die in der Bleichsuspension eingesetzte ofentrockene (otro) Faserstoffmenge. Die der Bleichsuspension zugesetzte Peroxidmenge variiert im Bereich von 0,5-50 kg/t otro Zellstoff.

Wenn Magnesium zugesetzt wird, wird dieses der Bleichlösung in der Regel als lösliches Salz wie z.B. Magnesiumsulfat bzw. Bittersalz in Mengen von 0,5-10 kg/t otro Faserstoff zugegeben. Überraschenderweise hat sich gezeigt, daß gerade mit dem Zusatz der erfindungsgemäßen organischen Stabilisatoren bei Anwesenheit von geringen Magnesiummengen alkalische Peroxidbleichflotten bei der Bleiche der oben genannten Faserstoffe hervorragend stabilisiert werden können und gleichzeitig eine Weißgradsteigerung möglich ist, wodurch die Effizienz der Peroxidbleiche erheblich verbessert wird.

Der Zusatz weiterer Bleichhilfsmitteln oder Aktivatoren, wie z.B. Cyanamid, ist ebenfalls möglich.

Vorteilhafterweise werden als Phosphonate Aminotrismethylenphosphonsäure (ATMP) und deren N-Oxid (ATMP-O), Ethylendiamintetrakismethylenphosphonsäure (EDTMP) und deren N-Oxide (EDTMP-O), Diethylentriaminpentakismethylenphosphonsäure (DTPMP) und deren N-Oxide (DTPMP-O), Triethylentetraminhexakismethylenphosphonsäure (TTHMP) und deren N-Oxide (TTHMP-O), 2-Phosphonobutan-1,2,4-tricarbonsäure (PBTC), 1-Hydroxiethan-1,1-diphosphonsäure (HEDP) und N-(2-Carboxyethyl)-1-aminoethan-1,1-diphosphonsäure (CADP) ausgewählt.

Besonders vorteilhaft wird als Phosphonat-Hauptbestandteil die Diethylentriaminpentakismethylenphosphonsäure (DTPMP) ausgewählt.

Als Polyoxiverbindungen kommen biologisch gut abbaubare Komplexbildner mit einer Kettenlänge von 2 bis 7 C-Atomen, wie z.B Gluconsäure und Glucoheptonsäure als freie Säuren oder Lactone, Zitronensäure und Weinsäure, darüberhinaus auch eiweißhaltige Substanzen wie Casein, Kollagen, Eiweißhydrolysate oder auch deren Carboxylierungsprodukte, die als Komplexbildner die Stabilisierwirkung in Wasserstoffperoxidbleichbädern erhöhen können.

Besonders gute Ergebnisse werden mit den Polyoxiverbindungen Gluconsäure und/oder Glucoheptonsäure erzielt.

Als Poly-α-hydroxyacrylsäuren haben sich insbesondere welche mit einem Molekulargewicht zwischen 1.000 - 100.000, bezogen auf den Gewichtsmittelwert, bewährt. Als Aminopolycarbonsäuren haben sich die Nitrilotriessigsäure (NTA), die Ethylendiamintetraessigsäure (EDTA), die Diethylentriaminpentaessigsäure (DTPA) und die Hydroxyethyldiamintriessigsäure (HEDTA) bewährt.

Dabei können die Phosphonate, die Aminopolycarbonsäuren, die Poly-α-hydroxyacrylsäure und/oder die Polyoxiverbindungen als freie Säuren oder deren Alkali-, Erdalkali-, Aminsalze, z.B. als Natrium-, Kalium-, Magnesium-, Calcium-, Ammonium-, Mono- ethanolamin-, Diethanolamin-, oder Triethanolaminsalze eingesetzt werden. Werden die genannten Komplexbildner bereits als Magnesiumsalze eingesetzt, ist es möglich den ggf. separat zugesetzten Anteil an Magnesiumverbindungen im Bleichprozeß um den entsprechenden Gehalt zu reduzieren.

Wird die erfindungsgemäße Stabilisatorenmischung gemäß einer weiteren bevorzugten Ausführungsform des Verfahrens silikatfrei eingesetzt, so können die Schwierigkeiten, die unter Verwendung von Wasserglas als Stabilisator der Bleichlösung zur Papierherstellung bei Papiermaschinen und in anderen Anlagenteilen auftreten, vermieden werden. Außerdem weisen die nach dem erfindungsgemäßen Verfahren gebleichten Papiere keine rauhe Griffigkeit auf.

Die Temperaturen für die Bleiche von Zellstoff, Altpapier und Holzstoff sind unterschiedlich. In der technischen Anwendung liegen sie im weiten Bereich zwischen 30 und 130°C. Dabei wird sowohl bei atmosphärischem Druck als auch im geschlossenen System bei höheren Drücken gebleicht. Die angewandten Drücke können dabei im Bereich von 0,1-1,5 MPa variieren. Die benötigte Sauerstoffmenge bewegt sich im Bereich von 1-30 kg/t otro Zellstoff. Die Bleiche von Zellstoffen, Altpapier und Holzstoff kann in verschiedenen an sich bekannten Apparaturen erfolgen, so z.B. in Türmen. Im allgemeinen wird der Bleichprozeß in wenigstens einer oder in mehreren aufeinanderfolgenden Bleich- und Waschstufen durchgeführt. Die Dauer des Bleichprozesses hängt von der jeweiligen Bleichstufe ab und variiert in weiten Grenzen. Im allgemeinen bewegt sich die Verweilzeit im Bereich von 30 Minuten bis zu 10 Stunden. Längere Bleichzeiten können unter Umständen auch erforderlich sein. Die Konsistenz der alkalischen Bleichsuspension, das Verhältnis zwischen Faserstoff und Bleichlösung ist während des Bleichvorgangs unterschiedlich und kann in den jeweiligen Bleich- und Waschstufen im Verhältnis 1:20 bis 1:2 schwanken. Die Stufenfolge des Bleichprozesses ist ebenfalls sehr verschieden. Im technischen Prozeß werden Zellstoffe aufgrund ökologischer Aspekte in einer ersten Bleichstufe des Prozesses in einer Sauerstoffstufe, die unter Druck durchgeführt und der Wasserstoffperoxid zugegeben werden kann, weitgehend delignifiziert. Daran können sich eine zweite mit Peroxiden verstärkte Sauerstoffstufe, Peroxidbleichstufen, saure Waschstufen oder Komplexbildnerstufen anschließen.

Auch die Bleiche von Zellstoff mit Ozon ist heute realisiert. Vor der Ozonbehandlung wird die wäßrige Zellstoffsuspension zumeist mit Schwefelsäure auf einen pH im Bereich von 2-6 eingestellt. Die Ozonbleiche kann bei einer Konistenz von 0,5-40 % durchgeführt werden. Die dabei eingesetzten Ozonmengen liegen im Bereich von 0,1-50 kg/t otro Zellstoff. Üblicherweise wird der Zellstoff zum Erreichen des angestrebten Endweißgrads nach der Ozonbehandlung mit Peroxid weitergebleicht. Gerade mit Ozon gebleichte Zellstoffe zeigen in einer anschließenden alkalischen Peroxidbleichstufe einen deutlichen Abfall der Viskosität. Die Anwendung der Komplexbildner-Kombination führt demgegenüber zu einer deutlichen Reduzierung des Viskositätsabfalls, während dagegen einzelne Komponenten der Komplexbildner-Kombination keine oder eine nur sehr geringe Wirkung zeigen.
Die Anwendung der Komplexbildner-Kombination wird in den nachfolgenden Beispielen näher erläutert, ohne daß andere Anwendungsmöglichkeiten dadurch ausgeschlossen wären.

### Untersuchte Abmischungen:

In der folgenden Tabelle werden die Wirksubstanzanteile der jeweiligen Komplexbildner, bezogen auf die freien Säuren, angegeben. Natriumgluconat wird als Natrium-salzanteil angegeben. Um die Mischungen untereinander klar vergleichen zu können, wurde als Einsatzkonzentration für die Beispiele einheitlich von einem 25%igen Wirksubstanzanteil in der Formulierung ausgegangen. Dies bedeutet, daß eine angegebene Einsatzkonzentration von z.B. 0,1 % Komplexbildnermenge (bezogen auf die Wirksubstanz) den Einsatz von 0,4 % der jeweiligen Mischung bedeutet. Für die Anwendung in technischen Bleichprozessen kann man die angegebenen Mischungsverhältnisse mit weitaus weniger Wasser als stabiles Produkt herstellen, z.B. ist es problemlos möglich, die Mischung 1 dreifachkonzentriert, also mit 18% DTPMP und 39% Natriumgluconat, herzustellen. Darüber hinaus kann es für technische Prozesse sinnvoll sein, Komplexbildner wie Phosphonate, Aminopolycarbonsäuren oder eine Poly-α-hydroxyacrylsäure separat von beispielsweise einer handelsüblichen 60%igen Gluconsäure/ Natriumgluconat-Lösung zu dosieren.

| Mischung | DTPMP [%] | HEDP [%] | Natriumgluconat [%] | PHAS [%] | DTPA |
|---|---|---|---|---|---|
| 1 | 6 | | 25 | | |
| 2 | 5 | 1 | 25 | | |
| 3 | 5 | 1 | 13 | | |
| 4 | 5 | | 10 | 4 | |
| 5 | | | 13 | | 6 |
| 6* | 3 | | 13 | | 3 |
| DTPMP: Diethylentriaminpentakis(methylenphosphonsäure) | | | | | |
| HEDP: 1- Hydroxyethan-1,1-diphosphonsäure | | | | | |
| PHAS: Poly-α-hydroxyacrylsäure | | | | | |
| DTPA: Diethylentriaminpentaessigsäure | | | | | |

| | | | | | |
|---|---|---|---|---|---|
| * nicht Gegenstand der Erfindung | | | | | |

### Beispiel A

### Abschließende MC-Peroxid-Stufe eines u.a. mittels Ozon vorgebleichten Zellstoffs

### Beschreibung der exemplarisch dargelegten Anwendung der Komplexbildner-Kombination Mischung 2

Im Beispiel A werden die erhebliche Verbesserung der Viskosität und des Weißgrads des endgebleichten Zellstoffes und die verbesserte Effektivität des PeroxidEinsatzes gezeigt, die im Vergleich zum Blindversuch erreicht wird. Die stabilisierende Wirkung wird durch die Verwendung von DTPMP nicht erreicht, da keine Verbesserung gegenüber dem Blindversuch, d.h. ohne Peroxidstabilisator, möglich ist.

### Vorbehandlung

### Bleichsequenz A/OP₁/OP₂/Z

Der in deionisiertem Wasser suspendierte Zellstoff wurde bei einer Konsistenz von 3,0% in einer ersten Stufe, der sauren Waschstufe (A), mit Schwefelsäure auf einen pH von 2 eingestellt und 30 min bei einer Temperatur von 70°C digeriert. Anschließend wurde der Zellstoff säurefrei gewaschen. In einer zweiten Stufe (OP₁) wurde die 10%ige Faserstoffsuspension in einem elektrisch beheizten Edelstahlautoklaven, der über Kopf dreht, mit einer wäßrigen alkalischen Bleichlösung, bestehend aus 2,75% NaOH, 2,0% H₂O₂ und 1,0% MgSO₄, bei einer Temperatur von 100°C und einem Sauerstoffdruck von 0,8 MPa 140 Minuten lang behandelt. Die anschließende dritte Behandlungsstufe (OP₂) entsprach weitgehend der zweiten Bleichstufe, jedoch wurde der Bleichsuspension anstelle von 2,75% NaOH lediglich 1,5 % NaOH und anstelle von 1,0% MgSO₄ nur 0,5% MgSO₄ zugesetzt. Vor der Ozonbehandlung wurde der Zellstoff in einer 3%igen wäßrigen Zellstoffsuspension mit Schwefelsäure auf pH 2,5 eingestellt, 30 min bei Raumtemperatur belassen und anschließend mittels einer Zentrifuge auf einen Feststoffgehalt von ca. 40% eingestellt. Der Zellstoff wurde daraufhin in einem Scheibenrefiner geflufft und anschließend in Chargen von 50g otro Zellstoff mit 0,2% Ozon zur Reaktion gebracht, mit deionisiertem Wasser gewaschen und erneut zentrifugiert. Es wurden die Viskosität (T230), die Kappazahl (Zellcheming Merkblatt IV/37/63 u. T246) und der Weißgrad (T217) gemäß den jeweiligen Standard Test Methoden der Technical Association of the Pulp and Paper Industrie (TAPPI) oder entsprechend den Vorschriften des Vereins der Papier- und Zellstoffchemiker und -Ingenieure (Zellcheming) bestimmt.

Die Eigenschaften des A/OP₁/OP₂/Z vorgebleichten Zellstoffs sind in Tabelle 1 aufgeführt. Der so vorbehandelte Fichtenkraftzellstoff war Ausgangsstoff für die abschließende Mittelkonsistenz(MC)-Peroxid-Bleichstufe.

### MC-Peroxid-Bleichstufe (P)

Die Zellstoffsuspension wurde mit 1,5% NaOH, 0,5% MgSO₄ und 2,0% H₂O₂ versetzt und mit deionisiertem Wasser auf eine Konsistenz von 10% eingestellt. Anschließend wurde die alkalische Zellstoffsuspension in Edelstahlbomben gegeben. Diese wurden in einem Hanau Linitest®, in dem diese seitlich liegend rotiert wurden, bei 90°C behandelt. Die Reaktionszeit betrug 200 Minuten.
Alternativ wurde Mischung 2 in Mengen von 0,1 und 0,3% sowie DTPMP in einer Menge von 0,3% in den Bleichversuchen eingesetzt. Im Versuch - ohne Stabilisator - wurde keine der beiden Komponenten eingesetzt.
Bei Reaktionsende wurde iodometrisch der verbliebene Gehalt an Wasserstoffperoxid am Filtrat der alkalischen Bleichlösung bestimmt. Am Zellstoff erfolgte die Viskositätsbestimmung (T230), die Herstellung der Weißgradblätter (T218) und die Weißgradmessung (T217) gemäß den TAPPI Standards.

**Tabelle 1**

| Bleichstufe | ungebleicht | A | OP₁ | OP₂ | Z |
|---|---|---|---|---|---|
| Viskosität [ml/g] | 985 | 978 | 858 | 823 | 686 |
| Weißgrad [% ISO] | 22,7 | 26,6 | 48,2 | 69,3 | 81,9 |
| Kappazahl | 22,5 | 22,4 | 6,6 | 3,0 | 1,9 |

**Tabelle 2**

| Komplexbildner | ohne Stabilisator | DTPMP | Mischung 1 | Mischung 1 |
|---|---|---|---|---|
| Komplexbildnermenge [%] | - | 0,3 | 0,1 | 0,3 |
| Viskosität [mg/g] | 574 | 575 | 607 | 649 |
| Weißgrad [% ISO] | 90,5 | 90,7 | 90,6 | 90,7 |
| Rest-H₂O₂ [%] | 14,7 | 17,7 | 30,6 | 43,8 |

Schon die Verwendung von lediglich 0,1% Mischung 1 bezogen auf die otro Faserstoffmenge führt, im Vergleich zum Versuch ohne Stabilisatorzusatz, zu einer um 33 ml/g verbesserten Viskosität und zu einer Erhöhung der nach Reaktionsende verbliebenen Wasserstoffperoxidmenge um 48,0%. Mit dem Einsatz von 0,3% DTPMP konnte keine Verbesserung im Vergleich zum Versuch ohne Stabilisator erreicht werden. Dagegen wurde im Vergleich ohne Stabilisierung mit dem Einsatz der gleichen Menge an Mischung 1 eine Verbesserung der Viskosität um 75ml/g und eine Erhöhung der Restperoxidmenge um 66,4% erzielt.

### Beispiel B-1

### Abschließende MC-Peroxid-Stufe nach einer Ozonstufe bei unterschiedlicher Einsatzmenge von Wasserstoffperoxid

### Beschreibung der exemplarisch dargelegten Anwendung der Komplexbildner-Kombination Mischung 2

In dem Beispiel B-1 wird gezeigt, daß bei Verwendung der Komplexbildner-Kombination auch bei geringerem Einsatz von Wassertoffperoxid eine Verbesserung der Bleiche bezüglich des Wasserstoffperoxidverbrauchs als auch der Stoffeigenschaften des endgebleichten Zellstoffs erzielt wird. Als Referenz dient ein Versuch ohne den Zusatz eines Peroxidstabilisators.

### Vorbehandlung

### Bleichsequenz A/OP₁/OP₂/Z

Die Bleichstufen A, OP₁ und OP₂ sind identisch mit der im Beispiel A beschriebenen Methode und Versuchsdurchführung. Die Vorbehandlung und die Bleiche mit Ozon entspricht der unter Beispiel A beschriebenen Durchführung, anstelle von. 0,2% Ozon wurde hier jedoch nur 0,05% Ozon eingesetzt.
Die Eigenschaften des vorbehandelten Zellstoffs vor der Ozonbehandlung sind identisch mit den unter Beispiel A in Tabelle 1 aufgeführten Eigenschaften. Die Viskosität des mit erheblich reduzierter Menge Ozon (0,05%) behandelten Zellstoffs betrug 710 ml/g und der Weißgrad 72,8% ISO.

### MC-Peroxid-Bleichstufe (P)

Die Bleichversuche wurden in 250 ml Polyethylenflaschen, die in einem Wasserbad temperiert wurden, durchgeführt. Die Bleichbedingungen für die MC-Peroxid-Bleichstufe entsprachen den in Beispiel A bereits beschriebenen Bedingungen, wobei abweichend davon anstelle von 0,5% MgSO₄ lediglich 0,15% MgSO₄ und Wasserstoffperoxid alternativ in Mengen von 1,0 und 2,0% eingesetzt wurde. Die Komplexbildnermenge betrug in allen Versuchen, bei denen dieser zugesetzt wurde, 0,3%.

In Tabelle 3 sind die Ergebnisse aus den Bleichversuchen mit 1,0 bzw. 2,0% H₂O₂ zusammengestellt. Die Bestimmung der Zellstoffeigenschaften erfolgte nach den in Beispiel A beschriebenen TAPPI Standards.

**Tabelle 3**

| Wasserstoffperoxid | 1% H₂O₂ | 2% H₂O₂ | 1% H₂O₂ | 2% H₂O₂ |
|---|---|---|---|---|
| Mischung 2 [%] | - | - | 0,3 | 0,3 |
| Viskosität [ml/g] | 581 | 500 | 683 | 648 |
| Weißgrad [% ISO] | 80,0 | 81,6 | 81,9 | 83,0 |
| Rest-H₂O₂ [%] | 0,9 | 4,3 | 34,0 | 67,2 |

Die Ergebnisse zeigen, daß bei der Verwendung von Mischung 2 als Peroxidstabilisator bei einem Einsatz von 1,0 bzw. 2,0% Wasserstoffperoxid eine Steigerung des Weißgrads um 1,9 bzw. 1,4 Punkte und zum anderen eine Erhöhung der Viskosität um 102 ml/g bzw. 148 ml/g im Vergleich ohne den Zusatz eines Stabilisators erzielt wurden. Bedeutend ist darüber hinaus die effektive Stabilisierung des Wasserstoffperoxids, welches bei Reaktionsende zu 34,0 bzw. 67,2% der ursprünglich eingesetzten Menge vorhanden war, während in den entsprechenden Blindversuchen nur noch geringe Mengen von unter 1,0 bzw. 4,3% nachgewiesen werden konnten.

### Beispiel B-2

### Vergleich verschiedener Peroxidstabilisatoren in einer abschließenden MC-Peroxid-Bleichstufe nach einer Ozon-Stufe

### Beschreibung der exemplarisch dargelegten Anwendung der Komplexbildner-Kombination Mischung 2

Entsprechend den Anwendungen in dem oben angeführten Beispiel A und Beispiel B-1 wurde im Beispiel B-2 die Komplexbildner-Kombination, ebenfalls nach einer Ozonbleichstufe, mit zwei anderen Stabilisatoren, die zum einen als Komponente Phosphonsäuren enthielt, zum anderen phosphonsäurefrei war, verglichen.

### Vorbehandlung

### Bleichsequenz A/OP₁/OP₂/Z

Die Bleichstufen A, OP₁ und OP₂ sind identisch der unter Beispiel A beschriebenen Methode und Versuchsdurchführung. Die Vorbehandlung und die Bleiche mit Ozon entsprach der unter Beispiel A beschriebenen Durchführung. Anstelle von 0,2% Ozon wurde in diesem Beispiel jedoch nur 0,1% Ozon eingesetzt.

Die Eigenschaften des Zellstoffs vor der Ozonbehandlung sind in den Stufen A/OP₁/OP₂ identisch mit denen, die im Beispiel A in Tabelle 1 aufgeführt sind.
Der Zellstoff hat nach der Behandlung mit 0,1% Ozon eine Viskosität von 693 ml/g und einen Weißgrad von 75,0% ISO.

### MC-Peroxid-Bleichstufe (P)

Die Peroxidbleichstufe (P) wurde in Chargen von 5g otro Zellstoff in Polyethylenflaschen, die in einem Wasserbad temperiert wurden, durchgeführt. Die Konsistenz betrug 10%, die Temperatur 90°C und die Verweilzeit 180 Minuten. Neben 1,5% NaOH wurden der Bleichsuspension 0,15% MgSO₄ zugesetzt. Nach der
Bleiche wurde der Zellstoff gewaschen und die Eigenschaften gemäß der beschriebenen TAPPI Methoden bestimmt.

In Tabelle 4 sind die Ergebnisse der MC-Peroxid-Bleichstufe des mit 0,1% Ozon gebleichten Zellstoffs zusammengestellt.

**Tabelle 4**

| Komplexbildner | ohne Stabilisator | Natrium-Gluconat | Mischung 2 |
|---|---|---|---|
| Komplexbildnermenge [%] | - | 0,3 | 0,3 |
| Viskosität [ml/g] | 514 | 529 | 662 |
| Weißgrad [% ISO] | 83,6 | 84,5 | 84,9 |
| Rest-H₂O₂ [%] | 11,9 | 17,0 | 71,4 |

Im Vergleich von Mischung 2 zu Natriumgluconat oder dem Blindversuch zeigt sich, daß Mischung 2 beste Wirkung aufweist. Der Weißgrad ist um 1,9 Punkte, die Viskosität um 148 ml/g höher als im Blindversuch. Es zeigt sich weiterhin, daß das Natriumgluconat allein nur eine geringe Wirkung hat. Die stabilisierende Wirkung der Mischung 2 auf das Wasserstoffperoxid kann auch hier deutlich an der hohen verbliebenen Restmenge nachgewiesen werden. Während im Blindversuch lediglich 11,9% verbleiben, ergibt sich bei Verwendung des Stabilisators ein Restperoxidgehalt von 71,4%.

### Beispiel B-3

### Vergleich verschiedener Peroxidstabilisatoren in einer abschließenden MC-Peroxid-Bleichstufe nach einer Ozonstufe

Die Anwendung entspricht der, die in Beispiel B-2 beschrieben ist.

### Bleichsequenz O/A/OP/Z

In einer ersten Bleichstufe (O) wurde dem in deionisiertem Wasser suspendierten Zellstoff bei einer Konsistenz von 10% 2,5% NaOH und 1,0% MgSO₄ zugesetzt. Daraufhin wurde der Zellstoff bei einer Temperatur von 110°C und einem Sauerstoffdruck von 0,8 MPa 140 Minuten lang in einem elektrisch beheizten Edelstahlautoklaven, der über Kopf dreht, gebleicht und anschließend gewaschen. Anschließend wurde mit deionisiertem Wasser auf eine Konsistenz von 3% otro Zellstoff verdünnt, mit Schwefelsäure ein pH von 2 eingestellt und bei 70°C 30 Minuten lang digeriert. Daraufhin wurde der Zellstoff säurefrei gewaschen. Die OP-Bleichstufe wurde entsprechend der Sauerstoffstufe durchgeführt, wobei hierbei nur 1,5% NaOH, jedoch zusätzlich 2,0% H₂O₂ sowie 0,66% Cyanamid eingesetzt wurden. Anschließend wurde der Zellstoff von der alkalischen Bleichlösung abgetrennt und gewaschen.

Der Zellstoff wurde vor der Ozonbehandlung in einer 3%igen wäßrigen Suspension mit Schwefelsäure auf pH 2,5 eingestellt, 30 Minuten bei Raumtemperatur belassen und anschließend mittels einer Zentrifuge auf einen Feststoffgehalt von ca. 42% eingestellt. Danach wurde der Zellstoff in einem Scheibenrefiner geflufft und anschließend in Chargen von 50g otro Zellstoff mit 0,15% Ozon zur Reaktion gebracht, mit deionisiertem Wasser gewaschen und erneut zentrifugiert. Es wurden die Viskosität, die Kappazahl und der Weißgrad nach den genannten Methoden bestimmt.

Die Eigenschaften des Zellstoffs nach den entsprechenden Bleichstufen sind in Tabelle 5 zusammengestellt.

**Tabelle 5**

| Bleichstufe | ungebleicht | O | A | OP | Z |
|---|---|---|---|---|---|
| Viskosität [ml/g] | 999 | 831 | 818 | 761 | 697 |
| Weißgrad [% ISO] | 26,4 | 36 | 40,8 | 73,6 | 78,5 |
| Kappazahl | 23,4 | 9,6 | 9,4 | 2,4 | - |

### MC-Peroxid-Bleichstufe (P)

Entsprechend der in Beispiel B-2 beschriebenen Durchführung der MC-Peroxidbleichstufe wurde die P-Stufe im Beispiel B-3 in Polyethylenbeuteln, die in einem Wasserbad temperiert wurden, durchgeführt. Die Mengen der zugesetzten Chemikalien entsprechen ebenfalls Beispiel B-2.

Die Ergebnisse der MC-P-Stufe sind in Tabelle 6 zusammengestellt.

**Tabelle 6**

| Komplexbildner | ohne Stabilisator | Mischung 1 | Mischung 2 |
|---|---|---|---|
| Komplexbildnermenge [%] | - | 0,1 | 0,1 |
| Viskosität [ml/g] | 592 | 697 | 692 |
| Rest-H₂O₂ [%] | 40,8 | 71,4 | 72,3 |

### Beispiel C

### Vergleich verschiedener Peroxidstabilisatoren in einer MC-Peroxid-Bleichstufe

Beschreibung der exemplarisch dargelegten Anwendung der KomplexbildnerKombination Mischung 2, Mischung 3 und Mischung 5.

Die Mischungen DTPMP und Natronwasserglas werden als Peroxidstabilisatoren eingesetzt und die Ergebnisse mit denen eines Blindversuchs - ohne Zusatz eines Stabilisators - verglichen.

Vorbehandlung

### Bleichsequenz O/A/OP

In einer ersten Bleichstufe (O) wurden dem mit deionisiertem Wasser suspendierten Zellstoff bei einer Konsistenz von 10% 2,5% NaOH und 1,0% MgSO₄ zugesetzt. Daraufhin wurde der Zellstoff bei einer Temperatur von 110°C und einem Sauerstoffdruck von 0,8 MPa 140 Minuten lang in einem elektrisch beheizten Edelstahlautoklaven, der über Kopf dreht, gebleicht und anschließend gewaschen. Danach wurde wiederum mit deionisiertem Wasser auf eine Konsistenz von 3% otro Zellstoff verdünnt, mit Schwefelsäure ein pH von 2 eingestellt und bei 70°C 30 Minuten lang digeriert. Anschließend wurde der Zellstoff säurefrei gewaschen. Die zweite Bleichstufe (OP) entsprach der ersten Bleichstufe, wobei hierbei lediglich 1,5% NaOH jedoch zusätzlich 2,0% H₂O₂ sowie 0,66% Cyanamid eingesetzt wurden. Anschließend wurde der Zellstoff von der alkalischen Bleichlösung abgetrennt und gewaschen.

Die Eigenschaften des Zellstoffs nach den entsprechenden Bleichstufen sind in Tabelle 7 zusammengestellt.

**Tabelle 7**

| Bleichstufe | ungebleicht | O | A | OP |
|---|---|---|---|---|
| Viskosität [ml/g] | 985 | 818 | 813 | 780 |
| Weißgrad [% ISO] | 22,7 | 35,6 | 41,9 | 71,8 |
| Kappazahl | 22,5 | 7,5 | 7,5 | 2,4 |

### MC-Peroxid-Bleichstufe (P)

Die Versuchsdurchführung entsprach der in Beispiel A beschriebenen Methode. Abweichend davon wurden Mischung 2, 3, Mischung 5 und DTPMP in Mengen von 0,3% sowie Wasserglas in einer Menge von 3% eingesetzt. Im Blindversuch wurde kein Komplexbildner zugesetzt.
Die Ergebnisse der Peroxid-Bleichstufe sind in Tabelle 8 zusammengestellt.

**Tabelle 8**

| Komplexbildner | ohne Stabilisator | DTPMP | Wasserglas | Mischung 2 | Mischung 3 | Mischung 5 |
|---|---|---|---|---|---|---|
| Komplexbildnermenge [%] | - | 0,3 | 3,0 | 0,3 | 0,3 | 0,3 |
| Viskosität [ml/g] | 697 | 698 | 750 | 742 | 741 | 733 |
| Weißgrad [% ISO] | 80,1 | 79,4 | 80,2 | 79,5 | 78,0 | 79,8 |
| Rest-H₂O₂[%] | 17,2 | 38,2 | 80,3 | 79,3 | 74,6 | 65,3 |

Die Stabilisierung des Wasserstoffperoxids gelingt bei der Verwendung von Mischung 2 in ebenso guter Weise, wie dies mit Natronwasserglas möglich ist. Die Stabilisierung mit Mischung 3 ist demgegenüber nur unwesentlich schlechter. Verglichen mit DTPMP zeigt die Verwendung von Mischung 2, 3 und Mischung 5 eine erhebliche Verbesserung auf. Die Stabilisierung mit DTPMP allein bleibt unbefriedigend, da die verbliebene Menge Wasserstoffperoxid verglichen mit der im Blindversuch zwar deutlich höher, der Weißgrad jedoch schlechter ist und die Viskosität nicht verbessert wurde.

### Beispiel D

### HC-Peroxid-Stufe

### Beschreibung der exemplarisch dargelegten Anwendung

Die Komplexbildner-Kombination eignet sich im speziellen auch für die mögliche Anwendung in der Hochkonsistenzbleiche mit Peroxiden, in der es bei effektiver Stabilisierung des Wasserstoffperoxids überhaupt erst möglich ist, besonders hohe Weißgrade zu erzielen, ohne hohe Viskositäts- und Festigkeitseinbußen hinnehmen zu müssen.

### Vorbehandlung

### Bleichsequenz O/A/OP

Die Bedingungen der Bleichsequenz O/A/OP entsprachen denen der im Beispiel C beschriebenen Methode, wobei anstelle von 2,5% NaOH im Beispiel D 2,75% NaOH eingesetzt wurden.

Die Stoffeigenschaften des ungebleichten und des in den Stufen O/A/OP gebleichten Zellstoffs sind in Tabelle 9 dargestellt.

**Tabelle 9**

| Bleichstufe | ungebleicht | O | A | OP |
|---|---|---|---|---|
| Viskosität [ml/g] | 985 | 783 | 781 | 768 |
| Weißgrad [% ISO] | 22,7 | 39,0 | 45,2 | 72,4 |
| Kappazahl | 22,5 | 7,0 | 6,8 | 2,7 |

### Hochkonsistenz (HC)-Peroxid (P)-Stufe

In Edelstahlautoklaven, die in einem Silikonölbad über Kopf gedreht wurden, wurde bei 30% Stoffdichte, 0,8 MPa 02-Druck, 1,5% NaOH, 0,5% MgSO₄, 2,0% H₂O₂ und alternativ 0,5% Mischung 2 zugesetzt. Der Blindversuch wurde ohne den Zusatz der Komplexbildner-Kombination durchgeführt. Die Reaktionstemperatur betrug 90°C und die Reaktionszeit 200 Minuten.

Die Ergebnisse der sich an die Sequenz O/A/OP anschließenden HC-Peroxidbleichstufe sind vergleichend in der Tabelle 10 gegenübergestellt.

**Tabelle 10**

| Komplexbildner | ohne Stabilisator | Mischung 2 | Mischung 6 |
|---|---|---|---|
| Komplexbildnermenge [%] | - | 0,5 | 0,5 |
| Viskosität [ml/g] | 696 | 680 | 691 |
| Weißgrad [% ISO] | 82,3 | 86,4 | 84,8 |
| Rest-H₂O₂ [%] | 0,3 | 7,4 | 5,5 |

Mit Mischung 2 läßt sich eine Verbesserung des Weißgrads um 4,1 Punkte erzielen, wobei die Viskositätseinbußen im Vergleich zum Blindversuch trotz des sehr hohen Weißgradgewinns nur gering sind. Auch Mischung 6 ergibt für Weißgrad und Rest-H₂O₂ wesentlich bessere Resultate als der Blindversuch. Der Weißgradanstieg beträgt ausgehend von der Vorstufe 14 Punkte.

### Beispiel E

### Stabilisierung des Wasserstoffperoxids in einer durch H₂O₂ verstärkten Sauerstoff (OP)-Stufe als erste Bleichstufe

### Exemplarisch beschriebene Anwendung der Komplexbildner-Kombination Mischung 2

Im Beispiel E wird die Möglichkeit dargestellt, die Komplexbildner-Kombination beim Einsatz größerer Mengen Wasserstoffperoxid in einer durch mit Peroxiden verstärkten Sauerstoffbleichstufe anzuwenden, wobei ein noch ungebleichter, lediglich sauer entmineralisierter Zellstoff in dieser Bleichstufe behandelt wird.
Die Zellstoffeigenschaften des ungebleichten und sauer gewaschenen Zellstoffs (A) sind in der Tabelle 11 zusammengestellt.

**Tabelle 11**

| Bleichstufe | ungebleicht | A |
|---|---|---|
| Viskosität [ml/g] | 985 | 978 |
| Weißgrad [% ISO] | 22,7 | 26,6 |
| Kappazahl | 22,5 | 22,4 |

### Sauerstoff-Peroxid-Stufe (OP-Stufe)

Die Bleichversuche wurden in Edelstahlautoklaven, die in einem Silikonölbad temperiert und darin über Kopf gedreht wurden, durchgeführt. Nach der sauren Behandlung wurde der oben charakterisierte Zellstoff in Chargen von 40g otro bei einer Konsistenz von 10%, einer Temperatur von 100°C 140 Minuten lang bei 0,8 MPa 02-Druck mit 1,5% NaOH, 1,0% MgSO₄, 0,5% Mischung 2 behandelt, wobei alternativ 1,0 bis 4,0% H₂O₂ zugesetzt wurden. Gleichzeitig wurde jeweils ein Referenzversuch unter sonst gleichen Bedingungen, jedoch ohne den Zusatz von 0,5% Mischung 2 durchgeführt.

Die Eigenschaften des Zellstoffs nach der OP-Bleichstufe sind in Tabelle 12 vergleichend gegenübergestellt.

**Tabelle 12**

| Komplexbildner | ohne Stabilisierung | | | Mischung 2 | | |
|---|---|---|---|---|---|---|
| Wasserstoffperoxid [%] | 2,0 | 3,0 | 4,0 | 2,0 | 3,0 | 4,0 |
| Viskosität [ml/g] | 864 | 841 | 788 | 892 | 879 | 865 |
| Weißgrad [% ISO] | 54,9 | 60,7 | 64,1 | 55,9 | 62,2 | 65,8 |
| Kappazahl | 7,8 | 6,6 | 6,0 | 7,8 | 6,6 | 5,8 |

Bei gleicher Kappazahl kann im Vergleich zu den Referenzversuchen ohne Stabilisierung eine Verbesserung des Weißgrads erreicht werden. Die Viskosität der Zellstoffe wird bei erhöhtem Peroxideinsatz wesentlich weniger herabgesetzt, wenn Mischung 2 der Bleichlösung zugesetzt wird. Es kann annähernd das Viskositätsniveau des mit nur 2,0% H₂O₂ gebleichten Zellstoffs gehalten werden, obwohl dabei ein um bis zu zwei Kappazahlen reduzierter Restligningehalt und ein Weißgradgewinn um ca. 10 Punkte erzielt werden. Ohne Stabilisator wird die Viskosität des Zellstoffs stark herabgesetzt. Der Weißgrad bleibt ebenfalls hinter dem des mit Stabilisatorzusatz gebleichten Zellstoffs zurück.

### Beispiel F

### Bleiche von Altpapier

### Beschreibung der exemplarisch dargelegten Anwendung

Im Beispiel F wird gezeigt, daß der Weißgrad bei der Altpapierbleiche durch den Zusatz der Phosphonat-Gluconatmischung gesteigert werden kann.

### Vorbehandlung

### Bleichsequenz A/OP/P

Vor der Mittelkonsistenzperoxidbleichstufe wurde die 3%ige wäßrige Faserstoffsuspension bei pH 2 und einer Temperatur von 70°C 30 Minuten behandelt. Anschließend wurde der Faserstoff gewaschen.

Die Sauerstoff-Peroxidbleichstufe wurde in einem Autoklaven bei einer Konsistenz von 10% und einer Temperatur von 90°C durchgeführt. Der wäßrigen Zellstoffsuspension wurden 1,5% NaOH, 2% H₂O₂ und 0,5% MgSO₄ zugesetzt.

### MC-Peroxid-Bleichstufe (P)

Die Peroxidbleiche wurde in Polyethylenbeuteln, die in einem Wasserbad temperiert wurden, durchgeführt. Bei einer Temperatur von 90°C wurde die Faserstoffsuspension bei einer Konsistenz von 10% 90 Minuten lang mit 2% H₂O₂ behandelt. Die alkalische Bleichlösung enthielt 1,5% NaOH und 0,15% MgSO₄ bezogen auf die otro Faserstoffmenge.
Die optischen Eigenschaften wurden nach den genannten TAPPI Standard Methoden bestimmt.
Die Ergebnisse sind in der Tabelle 13 zusammengestellt.

**Tabelle 13**

| Komplexbildner | ohne Stabilisator | Mischung 2 |
|---|---|---|
| Komplexbildnermenge [%] | - | 0,3 |
| Weißgrad [% ISO] | 69,0 | 70,6 |
| Rest-H₂O₂[%] | 28,1 | 35,5 |

Mit dem Zusatz der Mischung 2 läßt sich der Weißgrad des gebleichten Altpapiers deutlich steigern.

### Beispiel G

### Bleiche von nach dem sauren Magnesiumbisulfitverfahren aufgeschlossenen Buchenzellstoff

### Beschreibung der exemplarisch dargelegten Anwendung

Im Beispiel G wird die Verbesserung des Weißgrads von Sulfitzellstoff bei Zusatz der Phosphonat-Gluconatmischung dargestellt.
Der Weißgrad des ungebleichten Buchenzellstoffs betrug 54,3% ISO und die Kappazahl 12,3. 10% eingestellt. Anschließend wurde die alkalische Zellstoffsuspension in Edelstahlbomben gegeben. Diese wurden in einem Hanau Linitest^{®} bei 80°C 90 Minuten lang behandelt.
Die Ergebnisse der Peroxidbleichstufe sind in der Tabelle 14 zusammengestellt.

**Tabelle 14**

| Komplexbildner | ohne Stabilisator | HEDP | Mischung 2 | Mischung 4 |
|---|---|---|---|---|
| Komplexbildnermenge [%] | - | 0,1 | 0,1 | 0,1 |
| Weißgrad [% ISO] | 75,7 | 74,9 | 77,6 | 77,5 |
| Rest-H₂O₂[%] | 1,0 | 0,6 | 3,2 | 5,9 |

Während mit dem Zusatz von Mischung 3 und der Kombination von Mischung 3 mit Poly-α-hydroxyacrylsäure der Weißgrad um ca. 2 Punkte gesteigert und der Restperoxidgehalt im Vergleich zum Blindwert fast vervierfacht werden kann, führt der Zusatz von HEDP zu einer Verschlechterung des Weißgrads und zu einer gegenüber dem Blindwert deutlichen Reduzierung des Restperoxidgehaltes.

Der Zusatz von Poly-α-hydroxyacrylsäure führt, bei gleichem Weißgrad, zu einer Verbesserung der verbleibenden Menge an Restperoxid.

## Patentansprüche

1. Verfahren zur Stabilisierung von alkalischen Bleichlösungen,
die Sauerstoff, Wasserstoffperoxid und/oder peroxidabspaltende Verbindungen enthalten
und unter Sauerstoffdruck, drucklos bzw. bei hydrostatischem Druck für die Bleiche von wäßrigen Faserstoffsuspensionen zur Papierherstellung oder zur Weiterverarbeitung in der chemischen Industrie genutzter Faserstoffe (Chemiezellstoffe) verwendet werden,
wobei als Stabilisator eine Kombination aus Komplexbildnertyp 1 zusammen mit Komplexbildnertyp 2 verwendet wird, dadurch gekennzeichnet, daß als Komplexbildnertyp 1 entweder Phosphonat oder Aminopolycarbonsäure, jedoch nicht Phosphonat und Aminopolycarbonsäure gemeinsam,
und als Komplexbildnertyp 2 Oxi- und/oder Polyoxiverbindungen mit 2 bis 7 C-Atomen in der Kohlenstoffkette und/oder Eiweißderivate - einzeln oder als Mischung - verwendet wird,
bei Verwendung von Aminopolycarbonsäure als Komplexbildnertyp 1 das Mengenverhältnis zwischen Komplexbildnertyp 1 und Komplexbildnertyp 2 zwischen 50: 50 und 5 : 95 Gewichtsprozent, jeweils bezogen auf die freien Säuren, beträgt, der Stabilisator phosphatfrei ist und die 1-Aminoalkan-1,1-Diphosphonsäuren von den Phosphonsäuren ausgeschlossen sind.

2. Verfahren nach Anspruch 1, dadurch gekennzeichnet, daß man als Phosphonate Aminotrismethylphosphonsäure (ATMP), deren N-Oxid (ATMP-O), Ethylendiamintetrakismethylenphosphonsäure (EDTMP), deren N-Oxide (EDTMP-O), Diethylentriaminpentakismethylenphosphonsäure (DTPMP), deren N-Oxide (DTPMP-O), Triethylentetraminhexakismethylenphosphonsäure (TTHMP), deren N-Oxide (TTHMP-O), 2-Phosphonobutan-1.2.4-tricarbonsäure (PBTC) und/oder 1-Hydroxyethan-1,1-diphosphonsäure (HEDP) verwendet.

3. Verfahren nach Anspruch 1 oder 2, dadurch gekennzeichnet, daß man als Phosphonat-Hauptbestandteil Diethylentriaminpentakismethylenphosphonsäure (DTPMP) verwendet.

4. Verfahren nach Anspruch 1 oder 2, dadurch gekennzeichnet, daß man als Komplexbildner 2 Gluconsäure, Gluconheptonsäure, jeweils als freie Säuren und/oder Lactone, Zitronensäure und/oder Weinsäure, als Eiweißderivate Casein, Kollagen, Eiweißhydrolysate und/oder deren Carboxylierungsprodukte, auswählt.

5. Verfahren nach Anspruch 1 oder 2, dadurch gekennzeichnet, daß man als Komplexbildner 2 Gluconsäure und/oder Glucoheptonsäure auswählt

6. Verfahren nach Anspruch 1 oder 2, dadurch gekennzeichnet, daß der Komplexbildnertyp 2 Gluconsäure ist.

7. Verfahren nach Anspruch 1 oder 2, dadurch gekennzeichnet, daß man als Aminopolycarbonsäure Nitrilotriessigsäure (NTA), Ethylendiamintetraessigsäure (EDTA), Diethylentriaminpentaessigsäure (DTPA) und/oder Hydroxyethylendiamintriessigsäure (HEDTA) verwendet.

8. Verfahren nach Anspruch 1 oder 2, dadurch gekennzeichnet, daß man als Aminopolycarbonsäure-Hauptbestandteil (DTPA) verwendet.

9. Verfahren nach einem oder mehreren der vorangegangenen Ansprüche, dadurch gekennzeichnet, daß man die Phosphonate, die C2-C7-Oxi und/oder Polyoxiverbindungen als freie Säuren oder deren Alkali-, Erdalkali-, Aminsalze, z.B. als Natrium-, Kalium-, Magnesium-, Calcium-, Ammonium-, Monoethanolamin-, Diethanolamin- oder Triethanolaminsalze verwendet.

10. Verfahren nach Anspruch 1, dadurch gekennzeichnet, daß das Mengenverhältnis zwischen Komplexbildnertyp 1 und 2 zwischen 95 : 5 und 2 : 98 Gewichtsprozent, jeweils bezogen auf die freien Säuren, beträgt.

11. Verfahren nach Anspruch 10, dadurch gekennzeichnet, daß das Mengenverhältnis zwischen Komplexbildnertyp 1 und 2 zwischen 50 : 50 und 5 : 95 Gewichtsprozent, jeweils bezogen auf die freien Säuren, beträgt.

12. Verfahren nach Anspruch 1, dadurch gekennzeichnet, daß die beiden Komplexbildnertypen getrennt eingesetzt werden.

13. Verfahren nach Anspruch 1, dadurch gekennzeichnet, daß die beiden Komplexbildnertypen als fertige Abmischungen eingesetzt werden.

14. Verfahren nach Anspruch 1, dadurch gekennzeichnet, daß die Gesamtmenge an Komplexbildner, bezogen auf die Summe der freien Säuren, 0,01 bis 3%, bezogen auf die ofentrockene Faserstoffmenge, beträgt.

15. Verfahren nach Anspruch 14, dadurch gekennzeichnet, daß die Gesamtmenge an Komplexbildner, bezogen auf die Summe der freien Säuren, 0,05 bis 0,5%, bezogen auf die ofentrockene Faserstoffmenge, beträgt.

16. Verfahren nach Anspruch 1, dadurch gekennzeichnet, daß die Peroxidverbindung Wasserstoffperoxid ist und in einer Menge von 0,1 bis 15 %, bezogen auf die ofentrockene Fasermenge, eingesetzt wird.

17. Verfahren nach Anspruch 16, dadurch gekennzeichnet, daß die Peroxidverbindung in einer Menge von 0,2 bis 5 %, bezogen auf die ofentrockene Fasermenge, eingesetzt wird.

18. Verfahren nach Anspruch 1, dadurch gekennzeichnet, daß die Bleiche bei einem Anfangs-pH-Wert größer 7,0 durchgeführt wird.

19. Verfahren nach Anspruch 1, dadurch gekennzeichnet, daß die Bleiche bei einem Anfangs-pH-Wert von 9 bis 13 durchgeführt wird.

20. Verfahren nach Anspruch 1, dadurch gekennzeichnet, daß die Temperatur zwischen 40°C und 140°C beträgt.

21. Verfahren nach Anspruch 1, dadurch gekennzeichnet, daß die Temperatur zwischen 70°C und 120°C beträgt.

22. Verfahren nach Anspruch 1, dadurch gekennzeichnet, daß - gegebenenfalls nach Magnesiumionenzusatz - die Faserstoffsuspension Magnesiumionen in einer Menge von bis zu 0,5% enthält.

23. Verfahren nach Anspruch 22 oder Anspruch 1, dadurch gekennzeichnet, daß der Faserstoffsuspension ein Magnesiumsalz zugesetzt wird, das die Menge an zugesetzten Magnesiumionen bis auf 0,5% erhöht.

24. Verfahren nach Anspruch 1, dadurch gekennzeichnet, daß der Faserstoffsuspension ein Magnesiumsalz zugesetzt wird, das die Menge an Magnesiumionen um 0,01 - 0,2% erhöht.

25. Verfahren nach Anspruch 1, dadurch gekennzeichnet, daß in Gegenwart von Peroxidaktivatoren gearbeitet wird.

26. Verfahren nach Anspruch 25, dadurch gekennzeichnet, daß es sich bei den Aktivatoren um stickstoffhaltige Verbindungen handelt.

27. Verfahren nach Anspruch 26, dadurch gekennzeichnet, daß die stickstoffhaltigen Verbindungen Nitrilamin, Dicyandiamid oder TAED sind.

28. Verfahren nach Anspruch 1, dadurch gekennzeichnet, daß die Peroxidstufe vor oder nach einer Ozonbehandlung stattfindet.

29. Verfahren nach Anspruch 1, dadurch gekennzeichnet, daß die Peroxidstufe vor oder nach einer sauren Wäsche stattfindet.

30. Verfahren nach Anspruch 1, dadurch gekennzeichnet, daß die Faserstoffe Zellstoffe, Holzstoffe oder Altpapier sind.

31. Verfahren nach Anspruch 1, dadurch gekennzeichnet, daß die Faserstoffe hochgereinigter Holzzellstoffe, sogenannte Chemiezellstoffe, zur Herstellung von Cellulosederivaten und -regeneraten sind.

32. Verfahren nach Anspruch 1, dadurch gekennzeichnet, daß die Bleichlösung silikatfrei ist.

33. Verfahren nach einem der Ansprüche 1 bis 32, dadurch gekennzeichnet, daß als Stabilisator verwendet wird eine Kombination aus Komplexbildnertyp 1 zusammen mit Komplexbildnertyp 2, wobei als Komplexbildnertyp 1 Phosphonat und/oder Aminopolycarbonsäuren und als Komplexbildnertyp 2 Gluconsäure verwendet wird,

34. Verfahren nach einem oder mehreren vorangegangenen Ansprüchen, dadurch gekennzeichnet, daß der Komplexbildnertyp 1 zusätzlich Poly-α-hydroxyacryl- säure umfaßt und der Komplexbildnertyp 2 die Hauptkomponente des Stabilisators bildet.

35. Verfahren nach Anspruch 34, dadurch gekennzeichnet, daß man als Poly-α-hydroxyacrylsäure Polymere in einem Molekulargewicht zwischen 1000 und 100.000, bezogen auf den Gewichtsmittelwert, auswählt.

36. Verfahren nach einem oder mehreren vorangegangenen Ansprüche, dadurch gekennzeichnet, daß das Mengenverhältnis zwischen Komplexbildnertyp 1 und Komplexbildnertyp 2, bezogen auf die freien Säuren, zwischen 95:5 und 19:81 beträgt.

## Claims

1. Process for stabilizing alkaline bleaching solutions comprising oxygen, hydrogen peroxide and/or compounds which split off peroxide and are used under an oxygen pressure, under normal pressure or under hydrostatic pressure for bleaching aqueous fibre material suspensions for papermaking or for further processing of fibre materials used in the chemical industry (chemical pulps), a combination of complexing agent type 1 together with complexing agent type 2 being used as the stabilizer, characterized in that either phosphonate or aminopolycarboxylic acid, but not phosphonate and aminopolycarboxylic acid together, is used as complexing agent type 1 and oxy and/or polyoxy compounds having 2 to 7 C atoms in the carbon chain and/or protein derivatives - individually or as a mixture - are used as complexing agent type 2, if aminopolycarboxylic acid is used as complexing agent type 1, the ratio of amounts between complexing agent type 1 and complexing agent type 2 is between 50:50 and 5:95 per cent by weight, in each case based on the free acids, the stabilizer is phosphate-free and 1-aminoalkane-1, 1-diphosphonic acids are excluded from the phosphonic acids.

2. Process according to Claim 1, characterized in that aminotrismethylphosphonic acid (ATMP), the N-oxide thereof (ATMP-O), ethylenediaminetetrakismethylenephosphonic acid (EDTMP), N-oxides thereof (EDTMP-O), diethylenetriaminepentakismethylenephosphonic acid (DTPMP), N-oxides thereof (DTPMP-O), triethylenetetraminehexakismethylenephosphonic acid (TTHMP), N-oxides thereof (TTHMP-O), 2-phosphonobutane-1,2,4-tricarboxylic acid (PBTC) and/or 1-hydroxyethane-1,1-diphosphonic acid (HEDP) are used as the phosphonates.

3. Process according to Claim 1 or 2, characterized in that diethylenetriaminepentakismethylenephosphonic acid (DTPMP) is used as the phosphonate main constituent.

4. Process according to Claim 1 or 2, characterized in that gluconic acid, glucoheptonic acid, in each case as free acids and/or lactones, citric acid and/or tartaric acid are chosen as complexing agent 2 and casein, collagen, protein hydrolysates and/or carboxylation products thereof are chosen as the protein derivatives.

5. Process according to Claim 1 or 2, characterized in that gluconic acid and/or glucoheptonic acid are chosen as complexing agent 2.

6. Process according to Claim 1 or 2, characterized in that gluconic acid is complexing agent type 2.

7. Process according to Claim 1 or 2, characterized in that nitrilotriacetic acid (NTA), ethylenediaminetetraacetic acid (EDTA), diethylenetriaminepentaacetic acid (DTPA) and/or hydroxyethylenediaminetriacetic acid (HEDTA) are used as the aminopolycarboxylic acid.

8. Process according to Claim 1 or 2, characterized in that DTPA is used as the aminopolycarboxylic acid main constituent.

9. Process according to one or more of the preceding claims, characterized in that the phosphonates and the C2-C7-oxy and/or polyoxy compounds are used as free acids or alkali metal, alkaline earth metal or amine salts thereof, for example as sodium, potassium, magnesium, calcium, ammonium, monoethanolamine, diethanolamine or triethanolamine salts.

10. Process according to Claim 1, characterized in that the ratio of amounts between complexing agent type 1 and 2 is between 95:5 and 2:98 per cent by weight, in each case based on the free acids.

11. Process according to Claim 10, characterized in that if phosphonate is used as complexing agent type 1, the ratio of amounts between complexing agent type 1 and 2 is between 50:50 and 5:95 per cent by weight, in each case based on the free acids.

12. Process according to Claim 1, characterized in that the two types of complexing agent are employed separately.

13. Process according to Claim 1, characterized in that the two types of complexing agent are employed as finished mixtures.

14. Process according to Claim 1, characterized in that the total amount of complexing agent, based on the sum of the free acids, is 0.01 to 3%, based on the amount of oven-dried fibre material.

15. Process according to Claim 14, characterized in that the total amount of complexing agent, based on the sum of the free acids, is 0.05 to 0.5%, based on the amount of oven-dried fibre material.

16. Process according to Claim 1, characterized in that the peroxide compound is hydrogen peroxide and is employed in an amount of 0.1 to 15%, based on the amount of oven-dried fibre.

17. Process according to Claim 16, characterized in that the peroxide compound is employed in an amount of 0.2 to 5%, based on the amount of oven-dried fibre.

18. Process according to Claim 1, characterized in that the bleaching is carried out at an initial pH of greater than 7.0.

19. Process according to Claim 1, characterized in that the bleaching is carried out at an initial pH of 9 to 13.

20. Process according to Claim 1, characterized in that the temperature is between 40°C and 140°C.

21. Process according to Claim 1, characterized in that the temperature is between 70°C and 120°C.

22. Process according to Claim 1, characterized in that the fibre material suspension comprises magnesium ions in an amount of up to 0.5% - if appropriate after addition of magnesium ions.

23. Process according to Claim 22 or Claim 1, characterized in that a magnesium salt which increases the amount of added magnesium ions to 0.5% is added to the fibre material suspension.

24. Process according to Claim 1, characterized in that a magnesium salt which increases the amount of magnesium ions by 0.01-0.2% is added to the fibre material suspension.

25. Process according to Claim 1, characterized in that it is carried out in the presence of peroxide activators.

26. Process according to Claim 25, characterized in that the activators are nitrogen-containing compounds.

27. Process according to Claim 26, characterized in that the nitrogen-containing compounds are nitrilamine, dicyandiamide or TAED.

28. Process according to Claim 1, characterized in that the peroxide stage takes place before or after an ozone treatment.

29. Process according to Claim 1, characterized in that the peroxide stage takes place before or after an acid washing.

30. Process according to Claim 1, characterized in that the fibre materials are pulps, wood pulps or recycled paper.

31. Process according to Claim 1, characterized in that the fibre materials are highly purified wood pulps, so-called chemical pulps, for the preparation of cellulose derivatives and regenerated celluloses.

32. Process according to Claim 1, characterized in that the bleaching solution is silicate-free.

33. Process according to one of Claims 1 to 32, characterized in that a combination of complexing agent type 1 together with complexing agent type 2 is used as the stabilizer, phosphonate and/or aminopolycarboxylic acids being used as complexing agent type 1 and gluconic acid being used as complexing agent type 2.

34. Process according to one or more of the preceding claims, characterized in that complexing agent type 1 additionally includes poly-α-hydroxyacrylic acid and complexing agent type 2 forms the main component of the stabilizer.

35. Process according to Claim 34 , characterized in that polymers in a molecular weight of between 1000 and 100,000, based on the weight-average value, are chosen as the poly-α-hydroxyacrylic acid.

36. Process according to one or more of the preceding claims, characterized in that the ratio of amounts between complexing agent type 1 and complexing agent type 2 is between 95:5 and 19:81, based on the free acids.

## Revendications

1. Procédé de stabilisation de solutions de blanchiment alcalines comprenant de l'oxygène, du peroxyde d'hydrogène et/ou des composés éliminant du peroxyde, et qui sont utilisées sous une pression d'oxygène, sous pression normale ou sous une pression hydrostatique pour le blanchiment de suspensions aqueuses de matière fibreuse en vue de fabriquer du papier ou de traiter davantage des matières fibreuses utilisées dans l'industrie chimique (pâtes chimiques), dans lequel on utilise, en tant que stabilisant, une association d'un agent complexant de type 1 et d'un agent complexant de type 2, caractérisé en ce que l'on utilise, en tant qu'agent complexant de type 1, soit un phosphonate, soit un acide aminopolycarboxylique, mais pas conjointement un phosphonate et un acide aminopolycarboxylique, et en tant qu'agent complexant de type 2, des composés oxy et/ou polyoxy ayant de 2 à 7 atomes de carbone dans la chaîne carbonée et/ou des dérivés de protéines - individuellement ou sous forme d'un mélange - , en ce que lorsque l'on utilise un acide aminopolycarboxylique en tant qu'agent complexant de type 1, le rapport de quantités entre l'agent complexant de type 1 et l'agent complexant de type 2 est compris entre 50:50 et 5:95 pour cent en poids, dans chaque cas par rapport aux acides libres, le stabilisant est exempt de phosphate et les acides 1-aminoalcane-1,1'-disphophoniques sont exclus des acides phosphoniques.

2. Procédé selon la revendication 1, caractérisé en ce que l'on utilise, en tant que phosphonates, l'acide aminotrisméthylphosphonique (ATMP), son N-oxyde (ATMP-O), l'acide éthylènediaminetétrakisméthylènephosphonique (EDTMP), ses N-oxydes (EDTMP-O), l'acide diéthylènetriaminepentakisméthylènephosphonique (DTPMP), ses N-oxydes (DTPMP-O), l'acide triéthylènetétraminehexakisméthylènephosphonique (TTHMP), ses N-oxydes (TTHMP-O), l'acide 2-phosphonobutane-1,2,4-tricarboxylique (PBTC) et/ou l'acide 1-hydroxyéthane-1,1-diphosphonique (HEDP).

3. Procédé selon la revendication 1 ou 2, caractérisé en ce que l'on utilise l'acide diéthylènetriaminepentakisméthylènephosphonique (DTPMP) en tant que constituant principal phosphonate.

4. Procédé selon la revendication 1 ou 2, caractérisé en ce que l'on choisit, en tant qu'agent complexant 2, l'acide gluconique, l'acide glucoheptonique, dans chaque cas sous forme d'acides libres et/ou de lactones, l'acide citrique et/ou l'acide tartrique, et en tant que dérivés de protéines, la caséine, le collagène, des hydrolysats de protéines et/ou leurs produits de carboxylation.

5. Procédé selon la revendication 1 ou 2, caractérisé en ce que l'on choisit l'acide gluconique et/ou l'acide glucoheptonique en tant qu'agent complexant 2.

6. Procédé selon la revendication 1 ou 2, caractérisé en ce que l'agent complexant de type 2 est l'acide gluconique.

7. Procédé selon la revendication 1 ou 2, caractérisé en ce que l'on utilise, en tant qu'acide aminopolycarboxylique, l'acide nitrilotriacetique (NTA), l'acide éthylènediaminetétra-acétique (EDTA), l'acide diéthylènetriaminepenta-acétique (DTPA) et/ou l'acide hydroxyéthylènediaminetriacétique (HEDTA).

8. Procédé selon la revendication 1 ou 2, caractérisé en ce que l'on utilise le DTPA en tant que constituant principal acide aminopolycarboxylique.

9. Procédé selon l'une ou plusieurs des revendications précédentes, caractérisé en ce que l'on utilise les phosphonates, les composés oxy et/ou polyoxy en C₂-C₇ sous forme d'acides libres ou de leurs sels de métaux alcalins, de métaux alcalino-terreux ou d'amines, par exemple sous forme de sels de sodium, de potassium, de magnésium, de calcium, d'ammonium, de monoéthanolamine, de diéthanolamine ou de triéthanolamine.

10. Procédé selon la revendication 1, caractérisé en ce que le rapport de quantités entre l'agent complexant de type 1 et l'agent complexant de type 2 est compris entre 95:5 et 2:98 pour cent en poids, dans chaque cas par rapport aux acides libres.

11. Procédé selon la revendication 10, caractérisé en ce que le rapport de quantités entre l'agent complexant de type 1 et l'agent complexant de type 2 est compris entre 50:50 et 5:95 pour cent en poids, dans chaque cas par rapport aux acides libres.

12. Procédé selon la revendication 1, caractérisé en ce que les deux types d'agents complexants sont utilisés séparément.

13. Procédé selon la revendication 1, caractérisé en ce que les deux types d'agents complexants sont utilisés sous forme de mélanges finis.

14. Procédé selon la revendication 1, caractérisé en ce que la quantité totale d'agent complexant, par rapport à la somme des acides libres, est de 0,01 à 3%, par rapport à la quantité de matière fibreuse séchée à l'étuve.

15. Procédé selon la revendication 14, caractérisé en ce que la quantité totale d'agent complexant, par rapport à la somme des acides libres, est de 0,05 à 0,5%, par rapport à la quantité de matière fibreuse séchée à l'étuve.

16. Procédé selon la revendication 1, caractérisé en ce que le composé peroxyde est le peroxyde d'hydrogène et est utilisé en une quantité de 0,1 à 15% par rapport à la quantité de fibre séchée à l'étuve.

17. Procédé selon la revendication 16, caractérisé en ce que le composé peroxyde est utilisé en une quantité de 0,2 à 5%, par rapport à la quantité de fibre séchée à l'étuve.

18. Procédé selon la revendication 1, caractérisé en ce que le blanchiment est réalisé à un pH initial supérieur à 7,0.

19. Procédé selon la revendication 1, caractérisé en ce que le blanchiment est réalisé à un pH initial de 9 à 13.

20. Procédé selon la revendication 1, caractérisé en ce que la température est comprise entre 40°C et 140°C.

21. Procédé selon la revendication 1, caractérisé en ce que la température est comprise entre 70°C et 120°C.

22. Procédé selon la revendication 1, caractérisé en ce que la suspension de matière fibreuse comprend des ions magnésium en une quantité allant jusqu'à 0,5%, éventuellement après addition d'ions magnésium.

23. Procédé selon la revendication 22 ou la revendication 1, caractérisé en ce qu'un sel de magnésium qui accroît la quantité d'ions magnésium ajoutés jusqu'à 0,5% est ajouté à la suspension de matière fibreuse.

24. Procédé selon la revendication 1, caractérisé en ce qu'un sel de magnésium qui accroît la quantité d'ions magnésium de 0,01 à 0,2% est ajouté à la suspension de matière fibreuse.

25. Procédé selon la revendication 1, caractérisé en ce que l'on procède en présence d'activateurs de peroxyde.

26. Procédé selon la revendication 25, caractérisé en ce que les activateurs sont des composés azotés.

27. Procédé selon la revendication 26, caractérisé en ce que les composés azotés sont la nitrilamine, le dicyanodiamide ou TAED.

28. Procédé selon la revendication 1, caractérisé en ce que l'étape au peroxyde a lieu avant ou après un traitement à l'ozone.

29. Procédé selon la revendication 1, caractérisé en ce que l'étape au peroxyde a lieu avant ou après un lavage acide.

30. Procédé selon la revendication 1, caractérisé en ce que les matières fibreuses sont des pâtes, des pâtes de bois ou des vieux papiers.

31. Procédé selon la revendication 1, caractérisé en ce que les matières fibreuses sont des pâtes de bois hautement purifiées, ce que l'on appelle des pâtes chimiques, pour la préparation de dérivés cellulosiques et de celluloses régénérées.

32. Procédé selon la revendication 1, caractérisé en ce que la solution de blanchiment est exempte de silicate.

33. Procédé selon l'une quelconque des revendications 1 à 32, caractérisé en ce que l'on utilise en tant que stabilisant, une association d'un agent complexant de type 1 et d'un agent complexant de type 2, en utilisant un phosphonate et/ou des acides aminopolycarboxyliques en tant qu'agent complexant de type 1 et l'acide gluconique en tant qu'agent complexant de type 2.

34. Procédé selon l'une ou plusieurs des revendications précédentes, caractérisé en ce que l'agent complexant de type 1 comprend en outre un acide poly-α-hydroxyacrylique et l'agent complexant de type 2 constitue le composant principal du stabilisant.

35. Procédé selon la revendication 34, caractérisé en ce que l'on choisit, en tant qu'acide poly-α-hydroxyacrylique, des polymères ayant un poids moléculaire compris entre 1 000 et 100 000, par rapport à la valeur moyenne en poids.

36. Procédé selon l'une ou plusieurs des revendications précédentes, caractérisé en ce que le rapport de quantités entre l'agent complexant de type 1 et l'agent complexant de type 2 est compris entre 95:5 et 19:81, par rapport aux acides libres.
